# EUROPEAN PATENT SPECIFICATION

(11) **EP 2 022 341 B1**
(45) Date of publication and mention of the grant of the patent: **12.12.2018**
(21) Application number: 07425468.1
(22) Date of filing: 26.07.2007
(51) Int. Cl.: A23C 11/10, A23L 11/30, A23L 11/00

(54) **A process for milling soya beans**
Verfahren zur Schrotung von Sojabohnen
Procédé pour la mouture de graines de soja

(43) Date of publication of application: 11.02.2009
(73) Proprietor: CFT S.p.A., 43122 Parma (IT)
(72) Inventor: Catelli, Roberto, 43100 Parma (IT); Lazzari, Alessio, 46030 Viadana (Mantova) (IT)
(74) Representative: Monelli, Alberto

(56) References cited:
- GB-A- 990 063
- GB-A- 2 119 218
- JP-A- 57 036 956
- US-A- 3 901 978
- US-A- 4 855 159
- US-A1- 2006 062 890
- US-B1- 6 602 534
- US-B1- 6 872 417

## Description

The invention relates to a process for milling soya beans. A plant for realising the process is also disclosed herein. In particular, the present invention relates to the sub-process of milling soya beans in a process for producing soya milk.

As is known, milling soya beans is an essential part of the production process of soya milk, whether liquid or in powder form. For the production of the milk starting from soya beans, the dried beans are first rehydrated by soaking them for a determined period, before being subjected to wet milling, adding the water needed to give the final product the desired consistency. The resulting milled product, internationally known as slurry, is then further processed to de-activate certain enzymes, sterilise the product and eliminate the insoluble residual solids (soya pulp or okara). Naturally freshness, quality and hygiene of the raw material used in the industrial process, i.e. the rehydrated soya beans which are milled, influence both the taste and the appeal of the milk produced. These requisites are, however, not always satisfied: in particular, the operations of collecting, stocking and transportation have an often very negative impact on the cleanliness and the freshness of the product to be processed. In effect, the soya beans entering into the described production process arrive at the processing plant either packed in sacks (big bags) or are directly loaded internally of the back of a truck. In both cases, there are always foreign bodies of various types and sizes mixed in with the soya beans, which foreign bodies can range from stones caught up in the process to powders, which inevitably deposit on the beans. Further, the beans are podded by a dehuller before the rehydration process, and the hulls thus become a part of the foreign bodies to be removed. In addition to the macroscopic foreign bodies there are is also the problem of eliminating any moulds present on the beans; a particularly frequent event is aflatoxin contamination.

To perform the necessary cleaning of the beans, the prior art describes processes of mechanical removal of the foreign bodies carried out by cleaning stations arranged upstream and downstream of the grinding mill performing bean dehulling. Generally, a net sieve is used at the entry to the plant to remove the largest-dimension impurities, while a vibrating sieve is arranged downstream of the mill, as well as an aspirator for removing the dust, the hulls and the other small-size foreign bodies.

Even in processing plants where the above-described cleaning stations are present the hygienic conditions of the product transported to the rehydrating stations are not excellent. Still-dusty beans reach the rehydrator, together with hulls or other foreign bodies. Further, the only precaution taken with regard to mould-contamination of the beans to be rehydrated is the optical scan performed upstream of the plant.

A further problem of the industrial production of soya milk relates to the presence in the milled soya beans of undesired substances which influence the characteristics of the final product. Many of the sugars in the beans, for example, cannot be broken down by Man's intestinal enzymes, and are thus responsible for digestive disturbances and flatulence. Further, the person buying the soya milk, who usually does so because of the dietetic qualities thereof, negatively judges a high presence of carbohydrates. Another substance possibly to be eliminated are soya pigments, which give the milk a colour not always appreciated by the consumer.

GB2119218 discloses a process which comprises the steps of (a) forming from ground or milled dehulled soybeans an aqueous soybean slurry; (b) adjusting the alkalinity of said soybean slurry to a pH of 8,5 to 9,5 by adding an alkaline agent thereto; (c) cooking said soybean slurry for such a time that the pH of said slurry drops to a pH in the range of 7,5 to 8,2; (d) neutralizing the soybean slurry to a pH of 7,0 to 7,4 with a strong mineral acid and then, if desired, adding further ingredients thereto to formulate a soymilk beverage; and (e) homogenizing said soybean slurry to a homogenized soymilk. This process do not solve the problem of a good cleaning of the soya beans.

US3901978 discloses a process for preparing a bland, stable aqueous dispersion of whole soybeans comprising: tenderizing intact soybean cotyledons until the soybeans exhibit a tenderometer value of between about 7 and about 136 kg (about 16 and about 300 pounds)/100 g of soybeans; heating the intact soybean cotyledons sufficiently to inactivate the lipoxidase enzyme contained therein; forming a slurry of the soybeans and water, said slurry having a soybean concentration of less than about 20 percent by weight; homogenizing said slurry in at least one pass through a homogenization zone at a pressure between 6.895 and 68.948 kPa (1.000 and 10.000 psi) at a temperature between about 0°C (23 DEGF) and the boiling point of the slurry at the pressure within the homogenizing zone; and recovering a bland, stable aqueous dispersion of whole soybeans. This process too do not solve the problem of a good cleaning of the soya beans.

The aim of the present invention is to provide a milling process of soya beans which can guarantee complete elimination of the powders, the residual hulls and other foreign bodies, as well as removing the undesired substances present in the bean such as sugars and pigments.

An advantage of the process of the invention relates to the obtaining of a complete and effective re-hydration of the bean before milling, with a consequent improvement in the quality of the milk product.

A further advantage of the process of the second invention concerns the possibility of continuously milling the rehydrated soya beans.

A further advantage of the described process derives from the precise and effective batching of the products supplying the plant.

A further advantage of the process of the present invention is to effectively de-activate the lipoxygenase enzymes present in the soya beans.

An advantage of the plane performing the process of the present invention relates to its high productivity.

Further characteristics and advantages of the invention will better emerge from the detailed description that follows, made herein below with reference to the accompanying figures of the drawings, given by way of non-limiting example, in which:

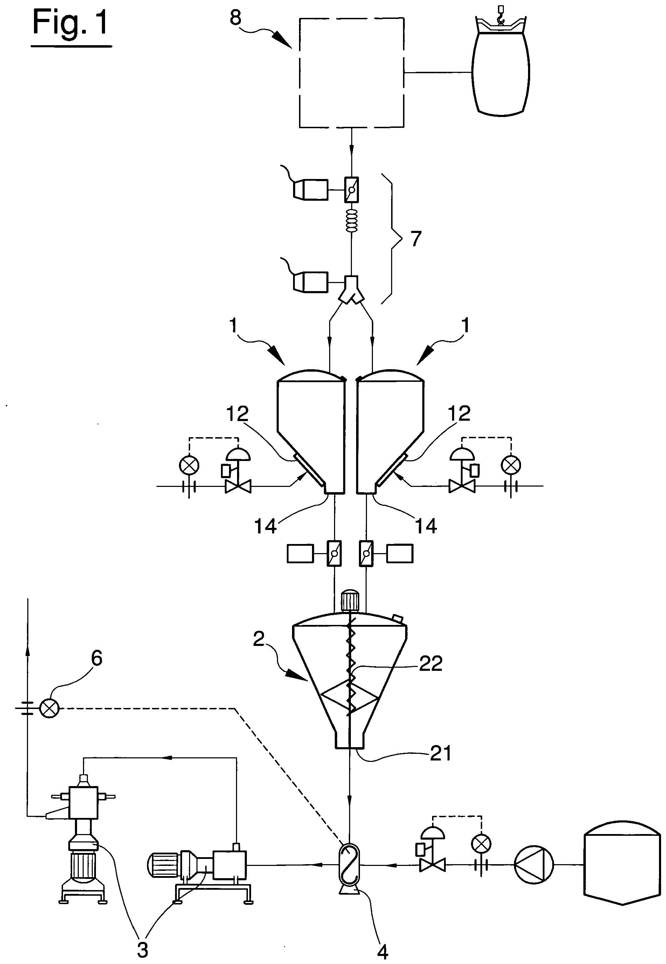

Figure 1 is a simplified flow diagram of the line of a plant suitable for realising the process of the present invention;

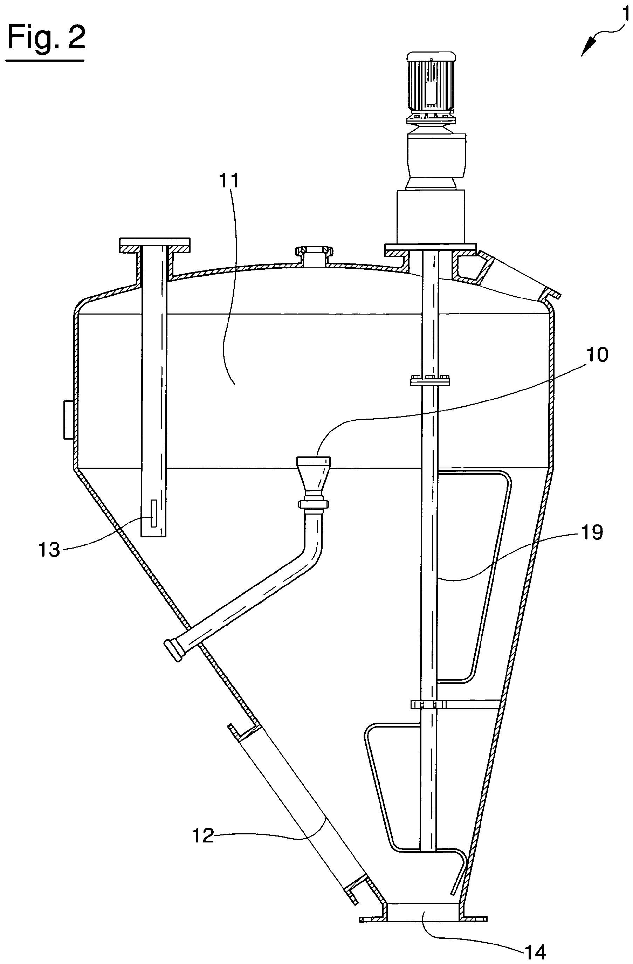

Figure 2 is a section view of a rehydrator suitable for realising the process of the present invention.

The process according to the present invention is as described in the appended claims.

The process of the present invention comprises the following stages: introducing rehydrating water internally of at least a rehydrator 1; introducing soya beans internally of the rehydrator 1; waiting to enable the absorption of part of the water by the soya beans; extracting the beans from the rehydrator 1; milling the soya beans extracted from the rehydrator to obtain slurry. To guarantee complete removal of the powders, residual hulls and other foreign bodies from the soya, as well as the removal of undesired water-soluble substances such as sugars and pigments present in the bean, the process further comprises at least a washing cycle of the soya beans; discharging at least a part of the excess water present in the rehydrator 1.

The above-described washing cycle causes a movement of the soya beans introduced into the rehydrator 1. In the preferred embodiment of the process, during the washing process the discharge of the excess water in the rehydrator 1 is done at least partially via at least an overflow 10, while the washing water is introduced into the rehydrator 1 at a lower level than the top of the overflow 10.

During the stage of introducing the rehydrating water and washing water into the rehydrator 1, the rehydrating water and the washing water are preferably at a considerably higher temperature than environmental temperature, but lower than the boiling point of water. Further, in order to heat the water contained in the rehydrator 1 to a temperature comprised between 60°C and the boiling point of water, the process can comprise a stage of injecting steam into the rehydrator 1 in which the rehydrating water has already been introduced. The team injection stage into the rehydrator 1 is thus done before the stage of introducing the soya beans into the rehydrator 1.

In the embodiment described herein, the rehydrating water is introduced first 1, and then the soya beans, which are left to soak in the water. The water is introduced when hot, at a temperature of between 60°C and 90°C, and can be further heated by injection of steam into the rehydrator 1. The high temperature of the water guarantees a fast absorption thereof by the beans, and also facilitates cleaning while de-activating some enzymes present in the beans, in particular lypoxygenase (to achieve this effect the final temperature of the water must be above 80°C). In general the mass ratio between the rehydrating water and the soya beans is about 2 to 1; on completion of rehydration (stage of extracting the soya beans from the rehydrator 1) the bean has absorbed a quantity of water which is between 1.3 and 1.5 times its initial mass.

The waiting time required for enabling absorption of part of the water by part of the soya beans in order that the beans can be rehydrated depends on various factors, including the freshness and quality of the raw materials being rehydrated. For 300 Kg. of soya beans immersed in 600 litres of water, this period varies between 20 and 60 minutes.

The one or more washing cycles of the beans are performed during the waiting period, thus optimising process times. The washing cycles are preferably between 1 and 3 in number. The washing water introduced into the rehydrator 1 is advantageously pre-heated to a same temperature as the rehydrating water; for each washing cycle, after discharge of the water used in the preceding cycle, a quantity of water is introduced which is preferably greater than the rehydrating water previously introduced (for 600 litres of rehydrating water, 800 litres of washing water). The water which is discharged at each washing cycle is slightly less than the washing water introduced, due to the effect of absorption thereof by the soya beans. As mentioned above, during the course of the washing cycles, the water is discharged in part through an overflow 10 in order to prevent the water from rising above a maximum upper level; preferably, at the end of each cycle, the water still present in the rehydrator is discharged from an outlet 14. The discharge water is not re-used but rather is filtered and conveyed to a purification station. The first washing cycle is advantageously started about 5 minutes after introduction of the soya beans into the rehydrator 1.

The milling process comprises the following stages, following the stage of waiting for allowing absorption of part of the water by the soya beans and before the stage of milling the soya beans; separating the rehydrated soya beans from at least part of the excess water (preferably all the excess water is discharged); introducing the rehydrated soya beans into a temporary tank 2; extracting the rehydrated soya beans from the temporary tank 2; adding milling water to the rehydrated soya beans. All the excess water is preferably separated from the rehydrated soya beans; this is done in an excess water discharge stage from the rehydrator 1. The discharge stage lasts approximately 5 minutes in the above-described case of rehydration of 300 kilograms of soya beans in 600 litres of rehydrating water. At the end of the excess water discharge stage, the rehydrated soya beans remain in the rehydrator 1 and are conveyed or discharged by force of gravity internally of the temporary tank 2. The presence of the temporary tank 2 containing only the rehydrated soya beans enables the milling units downstream of the tank to be continuously supplied. In the case of discharge of the soya beans by force of gravity into the temporary tank 2, during the course of the discharge masses may form in the lower part of the rehydrator 1, blocking the discharge of the material. To prevent this problem from occurring, the process comprises a stage of moving the rehydrated soya beans internally of the rehydrator by means of an anti-clog shaft 19.

The process comprises a stage of shaking the rehydrated soya beans, which stage is intermediate with respect to the stages introducing the rehydrated soya beans into a temporary tank 2 and extracting the rehydrated beans therefrom. The stage of shaking the soya beans is necessary to prevent a build-up of the beans which might clog up the outlet hole 21 of the temporary tank 2.

In order to solubilise the majority of the soya proteins during milling, the milling water can be a sodium carbonate solution: in this case a water pH of between 8 and 10 is preferable (while normally the milling water has a pH of 7.4 to 7.5). The use of carbonate increases process performance; in fact it enables extraction of a milk having a protein percentage of between 3.5% and 3.8%. To this end, the process described comprises a stage of preparing the milling water, the stage comprising following sub-stages: dissolving sodium carbonate in water at a considerably higher temperature than environmental temperature; retroactively controlling the dosage of sodium carbonate with the aim of maintaining the pH of the solution within predetermined values. For retroactive control of the dosage of sodium carbonate a pH-meter is normally used. The temperature of the milling water, with or without sodium carbonate, must be sufficiently high both for improving the internal solubility of the soya and for the de-activation of the enzymes in the lipoxygenase. The temperature must be above 80°C and lower than the boiling point of water. The preferred temperature is 95°C. For the quality of the finished product, it is of fundamental importance that the milling water and the soya beans are milled in the right proportions (the mass ratio between soya beans and water must be about 1/6). To this end, the process of the invention comprises stages of acquiring a control value which is proportional to the mass of milled product produced per unit of time during the stage of milling the soya beans and retroactively controlling the ratio between flow-controlled added milling water and soya beans on the basis of the control value. The control value is detected by a mass flow-meter 6; on the basis of this value, and in consideration that the mass flow of milling water is known and constant, it is possible to batch the introduction of the soya beans.

The process of the present invention further comprises, in the case that a rehydrator is used, a stage of weighing the soya beans in order to predispose batches thereof comprising a determined quantity of the beans, and a stage of sending the batches sequentially to at least two rehydrators 1, the stages preceding the stage of introducing the soya beans internally of the rehydrators 1. The stages of introducing the soya beans into the various rehydrators 1 are advantageously staggered so that they follow on at constant time intervals. For example, in a case where there are two rehydrators 1, internally of which the soya beans are kept for 50 minutes (45 minutes for rehydration and 5 minutes for water discharge), the second rehydrator is filled 25 minutes after the first, then after a further 25 minutes the first, by now discharged, will be newly filled with more soya, and so on. In the same way, the second is filled 12.5 minutes after the first is filled, the third after another 12.5 minutes, and so on.

The process of the present invention can further comprise a stage of dehulling and dusting the soya beans before the stage of weighing them. The dehulling and dusting stage is performed in a known way as described herein above.

As already mentioned, the process described herein is almost always done for the production of soya milk. To obtain soya milk, the process must comprise further known stages following the stage of milling (enzyme deactivation, separation of the milk from the okara, and so on). These process stages are not described in the present application as they do not constitute a specific object of the invention.

A plant for milling soya beans suitable for the above process comprises the following elements to be found in the prior art: at least a rehydrator 1 for rehydrating soya beans, comprising a rehydration chamber 11 predisposed to temporarily contain soya beans and rehydrating water, at least a grinding mill 3 for grinding the rehydrated soya beans, means for conveying the rehydrated soya beans from the rehydrator to the at least a mill 3. Further, the rehydrating chamber 11 of the rehydrator houses at least an overflow 10 for discharge of the excess water and at least an inlet hole 12 located lower than the overflow 10, the rehydrator 1 further comprising means for entry of the washing water into the rehydration chamber 11 through the inlet hole 12. Note that should there be more than one overflow 10, the overflows will be located at a same height.

The means for entry of the washing water into the rehydrating chamber consist, in the described embodiment, of a simple pump connected to a source of hot washing water. The washing water and the rehydrating water can, but not necessarily, be introduced into the rehydrating chamber 11 through the same inlet hole 12; in this case the rehydrating water source is the same, and is moved by the same pump. In general, a distinction is made between rehydrating water and washing water on the basis of the sequence of entry into the rehydrating chamber 11. In a case where the two liquids are taken from the same source, the rehydrating water is considered to be the water sent in first, which fills the chamber up to the level of the overflow or overflows, while the washing water is the water introduced thereafter.

At least an injection opening 13 opens in the rehydrating chamber 11 for direct injection of steam into the chamber. The steam injection has the above-described aim of raising the temperature of the water contained in the rehydrating chamber before the introduction of the soya beans. The rehydrator 1 further comprises, as mentioned above during the description of the process, an anti-clog shaft 19 arranged internally of the rehydrating chamber 11, for facilitating the exit of the rehydrated soya beans.

The plant further comprises, as already discussed herein above, at least a temporary tank 2. The temporary tank 2 is arranged below the rehydrator 1. The plant also comprises at least a positive-displacement pump 4. The temporary tank 2 exhibits at least an outlet hole 21 for extraction of the material contained therein, while the rehydrator 1 exhibits a hole 14 for discharge of the excess water and is inferiorly openable to enable the rehydrated beans to fall by force of gravity internally of the temporary tank 2. The temporary tank 2 further internally comprises a stirrer 22 for keeping the soya beans contained therein moving, so that the outlet hole 21 does not get clogged up.

The plant further comprises a positive-displacement pump 4 connected in aspiration to the outlet hole 21 of the temporary tank 2 and to a source of milling water 5, delivering to the at least a mill 3. The positive displacement pump 4 is preferably an Archimedes screw, provided with an upper aspirating inlet located below the outlet hole 21 and a second aspirating inlet connected to the water source. If the milling water is a sodium carbonate solution, the milling water source can be used as a mixing tank for preparing the solution.

As mentioned above, the plant comprises a mass flow meter 6 arranged at the outlet of the at least a mill 3 and predisposed to generate signals for controlling the ratio between the milling water and the rehydrated soya beans entering the mill. The flow meter measures the mass of slurry exiting the mill; the regulation of the water-soya ratio is performed by varying the speed of the positive-displacement pump 4. The rehydrating water flow sent to the pump is kept constant, so that the change in speed determines a change in flow rate of the beans aspirated by the pump 4. The mills 3 of the plant are preferably two in number, and are arranged in series. The downstream mill of the plant grinds the slurry up until it reaches a colloid phase (particle dimensions of 10-50 µm).

If the milling plant includes at least two rehydrators 1, the plant comprises a weighing station 7, arranged upstream of the rehydrators 1, for batching predetermined quantities of soya beans. The plant further comprises means for sequentially sending the batches on to the rehydrators 1. The means can for example comprise alternatively-openable hatches located above the various rehydrators 1. A weighing station 7 can also be used in a plant comprising a single rehydrator.

The plant further comprises dehulling stations and dusting stations 8 arranged upstream of the weighing station 7. These stations are of known type and are summarily described in the presentation of the prior art.

The described plant is normally completed by addition of other upstream stations for finishing the process for obtaining soya milk.

## Claims

1. A milling process of soya beans, comprising following stages:
introducing rehydrating water into at least a rehydrator (1); introducing soya beans into the rehydrator (1); waiting to enable absorption of part of the water by the soya beans in order for the beans to be rehydrated; extracting the soya beans from the rehydrator (1); milling the soya beans extracted from the rehydrator (1) to obtain a slurry;
**characterised in that** it further comprises at least a washing cycle of the soya beans comprising stages of: introducing washing water into the rehydrator (1), in which rehydrator (1) the rehydrating water and the soya beans have already been introduced; discharging at least a part of the water present in the rehydrator (1), which part of the water is in excess;
the process comprising following stages, following the stage of waiting for a part of the water to be absorbed by the soya beans and preceding the stage of milling the soya beans: separating the rehydrated soya beans from at least a part of the excess water; introducing the rehydrated soya beans into a temporary tank (2): extracting the rehydrated soya beans from the temporary tank (2); adding milling water to the rehydrated soya beans;
acquiring a control value which is proportional to a mass of slurry produced per time unit during the stage of milling the soya beans;
retroactively controlling a ratio between the milling water added to the soya beans and the soya beans, on the basis of the control value.

2. The milling process of soya beans of claim 1, **characterised in that** the washing stage-cycle determines a movement of the soya beans introduced into the rehydrator (1).

3. The milling process of soya beans of claim 2, **characterised in that** during the washing cycle the discharging of the excess water in the rehydrator (1) is done at least partially via at least an overflow (10), while the washing water is introduced into the rehydrator (1) at a lower level than a level of the overflow (10).

4. The milling process of soya beans of one of the preceding claims, **characterised in that** during the stage of introducing rehydrating water into the rehydrator (1) the rehydrating water and the washing water are at a temperature comprised between 60°C and the boiling point of water.

5. The milling process of soya beans of claim 4, **characterised in that** it comprises a stage of injecting steam internally of the rehydrator (1), in which the rehydrating water and the soya beans have already been introduced, in order to heat the water contained in the rehydrator (1) to a temperature comprised between 80°C and the boiling point of water.

6. The milling process of soya beans of one of the preceding claims, **characterised in that** the control value is detected by a mass flow-meter (6); on the basis of this value, the step of retroactively controlling a ratio between the milling water added to the soya beans and the soya beans comprises the steps of:
- maintaining constant the mass flow of milling water;
- batching the introduction of soya beans.

7. The milling process of soya beans of one of the preceding claims, **characterised in that** it comprises a stage of agitating the rehydrated soya beans, the stage being an intermediate stage with respect to the stages of introducing the rehydrated soya beans into a temporary tank (2) and extracting the rehydrated soya beans from the tank.

8. The milling process of soya beans of one of the preceding claims **characterised in that** it comprises a stage of preparing the milling water, the stage comprising the following sub-stages: dissolving sodium carbonate in water at a temperature which is above 80°C and lower than the boiling point of water; retroactively controlling the dosage of the sodium carbonate in order to main a pH of the solution within predetermined parameters.

9. The milling process of soya beans of one of the preceding claims, **characterised in that** it comprises a stage of weighing the soya beans in order to predispose batches thereof comprising a determined quantity of the soya beans and a stage of sending on the batches sequentially to at least two rehydrators (1), the stages preceding the stage of introducing the soya beans into the rehydrators (1).

10. The milling process of soya beans of claim 9, **characterised in that** it comprises a stage of dehulling and dusting the soya beans before the stage of weighing the soya beans.

## Patentansprüche

1. Verfahren zur Schrotung von Sojabohnen, umfassend die folgenden Stufen: Einführen von Rehydratationswasser in mindestens einen Rehydrator (1); Einführen von Sojabohnen in den Rehydrator (1); Abwarten, um die Absorption eines Teils des Wassers durch die Sojabohnen zu ermöglichen, damit die Bohnen rehydratisiert werden; Extrahieren der Sojabohnen aus dem Rehydrator (1); Schroten der aus dem Rehydrator (1) extrahierten Sojabohnen, um einen Schlamm zu erhalten; **dadurch gekennzeichnet, dass** es ferner mindestens einen Waschzyklus der Sojabohnen umfasst, umfassend die Stufen: Einführen von Waschwasser in den Rehydrator (1), wobei in den Rehydrator (1) das Rehydratationswasser und die Sojabohnen bereits eingeführt wurden; Auslassen von mindestens einem Teil des im Rehydrator (1) vorhandenen Wassers, wobei der Teil des Wassers überschüssig ist:
wobei das Verfahren folgende Stufen umfasst, die der Stufe zum Warten auf die Aufnahme eines Teils des Wassers durch die Sojabohnen folgt und der Stufe zum Schroten der Sojabohnen vorausgeht: Abtrennen der rehydrierten Sojabohnen von mindestens einem Teil des überschüssigen Wassers; Einführen der rehydrierten Sojabohnen in einen Zwischentank (2); Extrahieren der rehydrierten Sojabohnen aus dem Zwischentank (2); Zugeben von Schrotungswasser zu den rehydrierten Sojabohnen; Erfassen eines Kontrollwertes, der proportional zu einer pro Zeiteinheit während der Stufe zum Schroten der Sojabohnen erzeugten Masse an Schlamm ist; rückwirkendes Kontrollieren eines Verhältnisses zwischen dem den Sojabohnen zugegebenen Schrotungswasser und den Sojabohnen auf der Grundlage des Kontrollwertes.

2. Verfahren zur Schrotung von Sojabohnen nach Anspruch 1, **dadurch gekennzeichnet, dass** der Waschzyklus eine Bewegung der in den Rehydrator (1) eingeführten Sojabohnen veranlasst.

3. Verfahren zur Schrotung von Sojabohnen nach Anspruch 2, **dadurch gekennzeichnet, dass** während des Waschzyklus das Auslassen vom überschüssigen Wasser im Rehydrator (1) mindestens teilweise über zumindest einen Überlauf (10) erfolgt, während das Waschwasser in den Rehydrator (1) auf einem niedrigeren Niveau als einem Niveau des Überlaufs (10) eingeführt wird.

4. Verfahren zur Schrotung von Sojabohnen nach einem der vorhergehenden Ansprüche, **dadurch gekennzeichnet, dass** das Rehydratisierungswasser und das Waschwasser während der Stufe zum Einführen von Rehydratisierungswasser in den Rehydrator (1) bei einer Temperatur zwischen 60°C und dem Siedepunkt des Wassers liegen.

5. Verfahren zur Schrotung von Sojabohnen nach Anspruch 4, **dadurch gekennzeichnet, dass** es eine Stufe zum Einspritzen von Dampf innerhalb des Rehydrators (1) umfasst, in der das Rehydratisierungswasser und die Sojabohnen bereits eingeführt wurden, um das im Rehydrator (1) enthaltene Wasser auf eine Temperatur zwischen 80°C und dem Siedepunkt des Wassers zu erhitzen.

6. Verfahren zur Schrotung von Sojabohnen nach einem der vorhergehenden Ansprüche, **dadurch gekennzeichnet, dass** der Kontrollwert von einem Massendurchflussmesser (6) erfasst wird; auf der Grundlage dieses Wertes umfasst der Schritt zum rückwirkenden Kontrollieren eines Verhältnisses zwischen dem den Sojabohnen zugegebenen Schrotungswasser und den Sojabohnen die Schritte:
- zum Erhalten des Massenstroms des Schrotungswassers konstant;
- zum Chargieren der Einführung von Sojabohnen.

7. Verfahren zur Schrotung von Sojabohnen nach einem der vorhergehenden Ansprüche, **dadurch gekennzeichnet, dass** es eine Stufe zum Rühren der rehydrierten Sojabohnen umfasst, wobei die Stufe eine Zwischenstufe in Bezug auf die Stufen zum Einführen der rehydrierten Sojabohnen in einen Zwischentank (2) und zum Extrahieren der rehydrierten Sojabohnen aus dem Tank ist.

8. Verfahren zur Schrotung von Sojabohnen nach einem der vorhergehenden Ansprüche, **dadurch gekennzeichnet, dass** es eine Stufe zum Vorbereiten des Schrotungswassers umfasst, wobei die Stufe die folgenden Teilstufen umfasst: Lösen von Natriumcarbonat in Wasser bei einer Temperatur, die über 80°C und niedriger als der Siedepunkt von Wasser ist; rückwirkendes Kontrollieren der Dosierung vom Natriumcarbonat, um einen pH-Wert der Lösung innerhalb vorbestimmter Parameter zu halten.

9. Verfahren zur Schrotung von Sojabohnen nach einem der vorhergehenden Ansprüche, **dadurch gekennzeichnet, dass** es eine Stufe zum Wiegen der Sojabohnen, um deren Chargen, die eine bestimmte Menge an Sojabohnen umfassen, vorzubereiten, und eine Stufe zum sequentiellen Senden der Chargen an mindestens zwei Rehydratoren (1) umfasst, wobei die Stufen der Stufe zum Einführen der Sojabohnen in die Rehydratoren (1) vorausgehen.

10. Verfahren zur Schrotung von Sojabohnen nach Anspruch 9, **dadurch gekennzeichnet, dass** es eine Stufe zum Schälen und Bestäuben der Sojabohnen vor der Stufe zum Wiegen der Sojabohnen umfasst.

## Revendications

1. Procédé pour la mouture de graines de soja, comprenant les étapes suivantes : introduire de l'eau de réhydratation dans au moins un réhydrateur (1) ; introduire des graines de soja dans le réhydrateur (1) ; attendre de permettre l'absorption d'une partie de l'eau par les graines de soja afin de permettre aux graines d'être réhydratées ; extraire les graines de soja du réhydrateur (1) ; faire la mouture des graines de soja extraites du réhydrateur (1) pour obtenir une bouillie ; **caractérisé en ce qu'**il comprend de plus au moins un cycle de lavage des graines de soja comprenant les étapes de : introduire l'eau de lavage dans le réhydrateur (1), l'eau de réhydratation et les graines de soja ayant été déjà introduites dans ledit réhydrateur (1) ; décharger au moins une partie de l'eau présente dans le réhydrateur (1), c'est-à-dire la partie de l'eau étant en excès ;
le procédé comprenant les étapes suivantes faisant suite à l'étape consistant à attendre qu'une partie de l'eau ait été absorbée par les graines de soja et précédant l'étape de la mouture des graines de soja : séparer les graines de soja réhydratées d'au moins une partie de l'eau en excès ; introduire les graines de soja réhydratées dans un réservoir temporaire (2) ; extraire les graines de soja réhydratées du réservoir temporaire (2) ; ajouter de l'eau de la mouture aux graines de soja réhydratées ; acquérir une valeur de contrôle étant proportionnelle à une masse de bouillie produite par unité de temps lors de l'étape de la mouture des graines de soja; contrôler rétroactivement un rapport entre l'eau de la mouture ajoutée aux graines de soja et les graines de soja sur la base de la valeur de contrôle.

2. Procédé pour la mouture de graines de soja selon la revendication 1, **caractérisé en ce que** le cycle de lavage détermine un mouvement des graines de soja introduites dans le réhydrateur (1).

3. Procédé pour la mouture de graines de soja selon la revendication 2, **caractérisé en ce que** pendant le cycle de lavage, le déchargement de l'eau en excès dans le réhydrateur (1) est effectué au moins partiellement via au moins un trop plein (10), pendant que l'eau de lavage est introduite dans le réhydrateur (1) à un niveau inférieur à un niveau de trop plein (10).

4. Procédé pour la mouture de graines de soja selon l'une des revendications précédentes, **caractérisé en ce que** lors de l'étape consistant à introduire de l'eau de réhydratation dans le réhydrateur (1), l'eau de réhydratation et l'eau de lavage sont à une température comprise entre 60°C et le point d'ébullition de l'eau.

5. Procédé pour la mouture de graines de soja selon la revendication 4, **caractérisé en ce qu'**il comprend une étape consistant à injecter de la vapeur à l'intérieur du réhydrateur (1), dans lequel l'eau de réhydratation et les graines de soja ont déjà été introduites, afin de chauffer l'eau contenue dans le réhydrateur (1) à une température comprise entre 80°C et le point d'ébullition de l'eau.

6. Procédé pour la mouture de graines de soja selon l'une des revendications précédentes, **caractérisé en ce que** la valeur de contrôle est détectée par un débitmètre massique (6) ; sur la base de cette valeur, l'étape consistant à rétroactivement contrôler un rapport entre l'eau de la mouture ajoutée aux graines de soja et les graines de soja, comprend les étapes de :
- maintenir constant le débit massique de l'eau de la mouture ;
- doser l'introduction des graines de soja.

7. Procédé pour la mouture de graines de soja selon l'une des revendications précédentes, **caractérisé en ce qu'**il comprend une étape consistant à agiter les graines de soja réhydratées, l'étape étant une étape intermédiaire par rapport aux étapes consistant à introduire les graines de soja réhydratées dans un réservoir temporaire (2) et à extraire les graines de soja réhydratées du réservoir.

8. Procédé pour la mouture de graines de soja selon l'une des revendications précédentes, **caractérisé en ce qu'**il comprend une étape consistant à préparer l'eau de la mouture, l'étape comprenant les sous-étapes suivantes : dissoudre du carbonate de sodium dans l'eau à une température étant supérieure à 80°C et inférieure au point d'ébullition de l'eau ; contrôler rétroactivement le dosage de carbonate de sodium afin de maintenir un pH de la solution dans une fourchette de paramètres prédéterminés.

9. Procédé pour la mouture de graines de soja selon l'une des revendications précédentes, **caractérisé en ce qu'**il comprend une étape consistant à peser les graines de soja afin de prédisposer les lots de celles-ci comprenant une quantité déterminée de graines de soja, et une étape consistant à envoyer les lots de façon séquentielle à au moins deux réhydrateurs (1), les étapes précédant l'étape consistant à introduire les graines de soja dans les réhydrateurs (1).

10. Procédé pour la mouture de graines de soja selon la revendication 9, **caractérisé en ce qu'**il comprend une étape consistant à décortiquer et à poudrer les graines de soja avant l'étape consistant à peser les graines de soja.
